# EUROPÄISCHE PATENTSCHRIFT

(11) **EP 3 727 933 B1**
(45) Veröffentlichungstag und Bekanntmachung des Hinweises auf die Patenterteilung: **12.04.2023**
(21) Anmeldenummer: 18830459.6
(22) Anmeldetag: 19.12.2018
(51) Int. Cl.: B60Q 1/08, B60Q 1/24, G01B 11/25, G06V 10/145, G06V 20/58, G08G 1/16

(54) **SCHNEEFAHRZEUG**
SNOW VEHICLE
VÉHICULE À NEIGE

(30) Priorität: 20.12.2017 AT 4942017
(43) Veröffentlichungstag der Anmeldung: 28.10.2020
(73) Patentinhaber: Prinoth AG, 39049 Sterzing (IT)
(72) Erfinder: THÖNY, Manfred, 6791 St. Gallenkirch (AT)
(74) Vertreter: Cicchetti, Angelo
(86) Internationale Anmeldenummer: PCT/EP2018/085789
(87) Internationale Veröffentlichungsnummer: WO 2019/121880

(56) Entgegenhaltungen:
- EP-A1- 3 118 515
- DE-A1- 10 154 635
- DE-A1-102015 200 748
- DE-U1-202013 006 071
- US-A1- 2013 243 247

## Beschreibung

Gegenstand der Erfindung ist ein Schneefahrzeug, mit mindestens einem Beleuchtungselement zur Orientierung in der Umgebung, nach dem Oberbegriff des Patentanspruches 1.

Ein solches Schneefahrzeug kann beispielsweise ein Pistengerät zur Präparierung von Skipisten und Loipen sein, sowie ein Transportfahrzeug zur Beförderung von Gütern und Personen auf einem verschneiten Untergrund.

Für die Orientierung in der verschneiten Umgebung bei Nacht weist ein solches Fahrzeug mindestens einen Scheinwerfer auf, der die Umgebung ausleuchtet und den Fahrer Hindernisse erkennen lässt.

So können beispielsweise Pistengeräte für die Präparation von Skipisten zusätzliche Scheinwerfer auf der Fahrerkabine aufweisen, um die Umgebung der zu präparierenden Skipiste bei Nacht auszuleuchten.

Die DE 10 2011 089 836 A1 zeigt eine Pistenraupe zur Bearbeitung und Gestaltung von Schneeoberflächen, mit mindestens zwei Scheinwerfern, die sich in Aussparrungen einer frontseitigen Verkleidungsmaske befinden.

Nachteilig an dieser Beleuchtung ist, dass gerade bei schlechten Wetterbedingungen der Untergrund der Umgebung mit dem Himmel verschwimmt und sich Hindernisse nur noch schwer oder gar nicht erkennen lassen. Auch tagsüber fällt es dem Fahrer schwer sich bei schlechten Witterungsbedingungen in der Umgebung zu orientieren.

Ein Beispiel dafür ist der sogenannte Whiteout, womit die Helligkeit beschrieben wird, die bei schneebedecktem Boden und gedämpftem Sonnenlicht (durch Bewölkung, Nebel oder Schneefall) beobachtet werden kann. Aufgrund der starken diffusen Reflexion des Sonnenlichts und der damit einhergehenden sehr hohen minimalen Leuchtdichte kommt es zu einer sehr starken Kontrastverringerung und das gesamte Blickfeld scheint gleichmäßig hell zu sein. Das hat ein Verschwinden des Horizonts zur Folge; Boden und Himmel gehen nahtlos ineinander über. Auch Konturen oder Schatten sind nicht mehr erkennbar und der Beobachter hat das Gefühl, sich in einem völlig leeren, unendlich ausgedehnten grauen Raum zu befinden.

Whiteouts stellen in einem Skigebiet einen ernstzunehmenden Gefahrenfaktor dar: In absturzgefährdetem Gebiet können Hindernisse oder Abgründe nicht mehr erkannt und Entfernungen sowie die Steilheit des Untergrundes nicht mehr abgeschätzt werden.

Selbst wenn eine Ausleuchtung durch die Beleuchtungseinheit des Fahrzeuges in einem Nahbereich teilweise möglich ist, erzeugt die herkömmliche Beleuchtung lediglich ein zweidimensionales Licht, womit sich Hindernisse erst spät oder gar nicht erkennen lassen.

Die DE 101 54 635 A1 zeigt ein Bodenbearbeitungsgerät mit einer Sensoreinrichtung, mit der eine in Fahrtrichtung vorgegebene Fläche des zu bearbeitenden Bodens gescannt werden kann und mit der ein Signal für die Höhensteuerung des Bodenbearbeitungsmittels, wie beispielsweise ein Räumschild, erzeugbar ist. Dazu weist die Sensoranordnung einen Lasersender und-empfänger auf, der Lichtstrahlen ausstrahlt und die vom Boden reflektierenden Strahlen in dem Empfänger hinsichtlich Laufzeit und Amplitude auswertet, um das Bodenbearbeitungsmittel zu steuern.

Nachteilig an dieser Vorrichtung ist, dass die Sensoranordnung komplex arbeitet und äußerst anfällig für Witterungseinflüsse ist. Zudem wird zwar das Bodenbearbeitungsmittel betätigt, jedoch erkennt der Fahrer nicht ob er auf ein Hindernis zusteuert, weshalb er nicht rechtzeitig ein Ausweichmanöver tätigen kann.

Die Aufgabe der vorliegenden Erfindung ist daher die Beleuchtung eines solchen Schneefahrzeuges dahingehend weiterzuentwickeln, dass eine bessere Erkennung von Hindernissen und topografischen Verhältnissen in der Umgebung des Fahrzeuges möglich ist.

Die der Erfindung zugrunde liegende Aufgabe wird durch die Merkmale des unabhängigen Patentanspruches gelöst, während vorteilhafte Ausgestaltungen und Weiterbildungen der Erfindung den Unteransprüchen entnommen werden können

Wesentliches Merkmal ist, das Beleuchtungselement zur Orientierung in der Umgebung des Schneefahrzeuges ein Laser mit mindestens einem Laserstrahl ist, der ein Muster mit einer Struktur auf den Untergrund der Umgebung projiziert, welches Muster an dem zur erkennende Hindernis oder dem topografischen Verhältnis optisch erkennbar verzerrt wird.

Durch die Verwendung eines Lasers, der mit mindestens einem scharffokussierbaren Laserstrahl ein definiertes Muster auf den Untergrund projiziert, ist somit für den Fahrer des Fahrzeuges eine objektbezogene optische Erkennung der Umgebung möglich.

Mit einer solchen objektbezogenen Erkennung kann die topografische Oberflächenbeschaffenheit der Umgebung erfasst werden. Durch eine abweichende Verschiebung oder Krümmung der Abbildung des Strahlenmusters kann auf das Vorhandensein eines Hindernisses geschlossen werden.

Ein solcher Laserstrahl lässt sich vorteilhafterweise auch über eine längere Wegstrecke abbilden, wobei sich eine solche Wegstrecke beispielsweise 6 bis 25 m vor das Schneefahrzeug erstreckt.

Der Grundlaser der den Laserstrahl ausstrahlt, ist mit einer speziellen Optik ausgestattet, die den Laserstrahl optisch derart transformiert, dass dieser aus seiner Einbauposition am Schneefahrzeug auf den Untergrund gerichtet eine bestimmte Struktur erzeugt, wobei bevorzugt eine speziell geschliffene Linse verwendet wird. Durch die Wellennatur des Lichts eignen sich feinste Mikrostrukturen zur Lichtablenkung.

Durch eine solche Linse wird der Laserstrahl optisch derart transformiert, dass dieser aus seiner Einbauposition am Schneefahrzeug auf den Untergrund gerichtet das Muster mit der definierten Struktur erzeugt.

Alternativ dazu kann ein Laserstrahl mittels eines rotierenden Spiegelkörpers oder beispielsweise einem beweglichen optischen Elements auf den Untergrund gerichtet werden.

Die auf dem Schneefahrzeug verwendeten Laser können beispielsweise über einen Teleskoparm ein- und ausgefahren werden. Der Teleskoparm kann beispielsweise elektrisch oder über einen elektromotorischen Stellmotor gesteuert werden.

Der erfindungsgemäße Laser projiziert ein exaktes Lichtmuster auf den Untergrund, das vom Fahrer des Fahrzeuges optisch ausgewertet werden kann. Somit können dreidimensionale Objekte aufgrund eines vom Laser erzeugten und auf den Untergrund projizierten Lichtgitters sichtbar gemacht werden. Hierauf ist die Erfindung jedoch nicht beschränkt.

Neben einem Lichtgitter bzw. Kreuzgitter können auch andere Strukturen von dem Laser erzeugt werden, wie beispielsweise Punktstrukturen, Kreisstrukturen, Mehrfachlinien oder Kreise.

Mit diesen Strukturen lassen sich die Tiefe und/oder Form von Hindernissen oder topografischen Verhältnissen der Umgebung erkennen.

Erfindungsgemäß ist der verwendete Laser selbstnivellierend, d.h. die Laserlinien sind immer zu 100 Prozent gerade - auch in einer Schräglage des Schneefahrzeuges gleicht die Linse die schiefe Positionierung aus.

Erfindungsgemäß weist die Lasersteuerung einen Gyroskop-Sensor auf, durch den sich die Ausrichtung des Lasers (Norden, Westen, Süden, Osten) sehr genau bestimmen lässt. Durch den Gyroskop-Sensor lassen sich Richtungsänderungen genau bestimmen. Wird diese Information mit Streckenmessungen verbunden, kann dadurch Ihr aktueller Standort bestimmt werden. Fährt das Schneefahrzeug beispielsweise in einem Tal, in dem kein GPS-Signal verfügbar ist, übernimmt das Gyroskop und stellt die fehlenden Informationen zur Verfügung.

Ein solcher Sensor kann ein Kippen oder Neigen des Schneefahrzeuges erkennen und über die Lasersteuerung entsprechend gegensteuern, damit das Lichtmuster auf den Untergrund immer die geünschte Struktur aufweist.

Wenn nun ein Fahrzeug auf eine Unebenheit in der Landschaft oder ein Objekt wie z.B. einen Baumstumpf zusteuert, wird das von dem Laser auf den Untergrund projizierte Kreuzgitter in der dritten Dimension verformt. Es kommt dabei zu einem räumlichen Versatz der Lasergitterlinien zueinander, welche sich in ihrem Abstand zueinander verändern oder gebogen werden. Somit kann ein Rückschluss auf ein vor dem Schneefahrzeug liegendes Objekt, sowie die Größe dieses Objekts geschlossen werden.

Mit dem erfindungsgemäßen Laser können somit Oberflächengeometrien unterschieden und identifiziert werden.

Eine solche Objekterkennung wäre mit einem diffusen Auflicht, welches beispielweise von einem Halogenscheinwerfer ausgestrahlt wird, nach dem Stand der Technik nicht möglich.

Bevorzugt wird ein rotes Laserlicht verwendet, da hiermit das Umgebungslicht unterdrückt wird und die Laserlinien besser sichtbar sind.

Hierauf ist die Erfindung jedoch nicht beschränkt. Auch die Verwendung einer anderen Farbgebung für den Laser, wie z.B. grün oder blau wird mit der vorliegenden Erfindung beansprucht. Eine solche Farbe kann beispielsweise durch vorgeschaltete Farbfilter erzeugt werden.

Die auf den Untergrund projizierte Struktur bewegt sich zusammen mit dem Schneefahrzeug in Fahrtrichtung, jedoch langsamer als das Fahrzeug, sodass der Effekt entsteht, dass das Fahrzeug das Muster überfährt. Der Vorteil des Überfahrens liegt neben einer besseren Orientierung unter anderem darin, dass das abgebildete Muster nicht flackert und somit eine Beeinträchtigung des Fahrers durch ein solches Flackern unterbunden wird.

Die Laserprojektion auf den Untergrund wird in Abhängigkeit von der Fahrgeschwindigkeit v, dem Lenkwinkel ϕ und des gewählten Getriebegangs G, sowie über Inertialsensoren, welche die Neigung des Schneefahrzeuges im Gelände erfassen, gesteuert.

So ist es möglich auf den Lenkeinschlag zu reagieren, sodass die Laser immer in Fahrtrichtung strahlen.

Legt der Fahrer beispielsweise den Rückwärtsgang ein, schaltet sich mindestens ein Laser auf der Rückseite des Schneefahrzeuges ein und die Oberflächenbeschaffenheit der rückseitigen Umgebung wird in Fahrtrichtung ausgeleuchtet.

Unabhängig davon ist es auch möglich, dass der Fahrer des Schneefahrzeuges manuell festlegt, welcher Bereich der unmittelbaren Schneefahrzeugumgebung erfasst werden soll.

In einer Weiterführung der Erfindung befindet sich mindestens ein Seitenlaser seitlich der Fahrerkabine. Durch diesen Seitenlaser kann ebenfalls ein Gittermuster auf den Untergrund projiziert werden. Hierauf ist die Erfindung jedoch nicht beschränkt. Auch eine Kreisstruktur kann ausgehend von dem Laser auf den Untergrund projiziert werden. Je nach Größe des Kreises kann der Fahrer auf den Abstand zu einem Objekt schließen. Fährt er beispielsweise an einem Waldrand entlang, ist der auf die Bäume projizierte Kreis kleiner als wenn der Laserstrahl in ein freies Gelände ausstrahlt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus der Zeichnungen und ihren Beschreibungen weitere erfindungswesentliche Merkmale und Vorteile der Erfindung hervor.

Soweit einzelne Gegenstände als "erfindungswesentlich" oder "wichtig" bezeichnet sind, bedeutet dies nicht, dass diese Gegenstände notwendigerweise den Gegenstand eines unabhängigen Anspruches bilden müssen. Dies wird allein durch die jeweils geltende Fassung des unabhängigen Patentanspruches bestimmt.

Es zeigen:
Figur 1: Schneefahrzeug in Vorderansicht
Figur 2: Schneefahrzeug in Seitenansicht
Figur 3: perspektivische Ansicht Laser
Figur 4: Seitenansicht Rotationslaser 1. Variante
Figur 5: Aufsicht Rotationslaser 1. Variante
Figur 6: Aufsicht Rotationslaser 2. Variante
Figur 7: Seitenansicht Rotationslaser 2. Variante
Figur 8: Aufsicht Schneefahrzeug
Figur 9: Aufsicht Schneefahrzeug mit Suchscheinwerfer
Figur 10: Vor- und Seitenansicht mit Suchscheinwerfer
Figur 11: Blockschaltbild

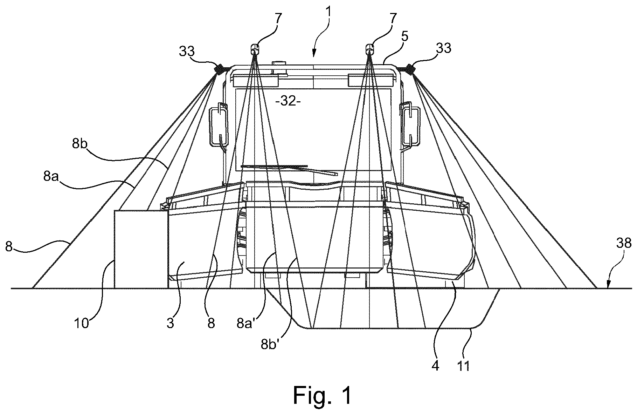

Figur 1 zeigt ein Schneefahrzeug 1, welches auf zwei unabhängig voneinander ansteuerbaren Kettenlaufwerken 4 auf dem Untergrund 38 der Umgebung 9 verfahrbar ist.

Das Schneefahrzeug 1 weist eine Fahrerkabine 5 auf, in welcher mindestens ein Fahrer zur Steuerung des Schneefahrzeuges 1 Platz findet. Die Fahrerkabine 5 weist eine Frontscheibe 32 auf, durch die der Fahrer die Umgebung 9 beobachten kann.

Oberhalb der Fahrerkabine 5 befinden sich in diesem Ausführungsbeispiel zwei Laser 7, welche Laserstrahlen 8 in Fahrtrichtung des Schneefahrzeuges 1 abgeben, sowie zwei Seitenlaser 33, die die Laserstrahlen seitlich des Schneefahrzeuges auf den Untergrund 38 ausstrahlen. Die Laserstrahlen 8 werden somit auf einen definierten Bereich des Untergrunds 38 projiziert.

Erreicht das Schneefahrzeug 1 ein Objekt in Fahrtrichtung, hier gezeigt als Baumstumpf 10, strahlen die Laserstrahlen 8 dieses Objekt an und aufgrund der durch das Objekt verkürzten Wegstrecke der Laserstrahlen sind auch die vormals auf den Untergrund 38 scheinenden Laserstrahlen 8 in ihrer Länge gekürzt und bilden nun die Strahlen 8a, 8b. Je nach Abstand des Lasers 33 von dem Baumstumpf 10 sind die Laserstrahlen 8a, 8b unterschiedlich lang und kürzer als die Laserstrahlen 8, welche weiterhin ungehindert auf den Untergrund 38 strahlen. Eine solche Differenz zwischen den einzelnen Laserstrahlen 8, 8a, 8b ist für den Fahrer des Schneefahrzeuges optisch erkennbar, wodurch der Fahrer auf das Objekt in Fahrtrichtung schließen kann und notfalls ein Ausweichmanöver tätigen kann.

Erreicht nun das Schneefahrzeug 1 die Vertiefung 11 strahlen die Laserstrahlen 8 aus dem Laser 7 dieses Hindernis an und aufgrund der durch das Objekt verlängerten Wegstrecke der Laserstrahlen sind auch die vormals auf den Untergrund 38 scheinenden Laserstrahlen 8 in ihrer Länge verlängert und bilden nun die Strahlen 8a', 8b`. Je nach Abstand des Lasers 7 zu den Bereichen der Vertiefung 11 sind die Laserstrahlen 8a', 8b` unterschiedlich lang und länger als die Laserstrahlen 8, welche weiterhin ungehindert auf den Untergrund 38 neben der Vertiefung 11 strahlen. Eine solche Differenz zwischen den einzelnen Laserstrahlen 8, 8a', 8b' ist für den Fahrer des Schneefahrzeuges optisch erkennbar, wodurch der Fahrer auf das Objekt in Fahrtrichtung schließen kann und notfalls ein Ausweichmanöver tätigen kann oder den Untergrund 38 an dieser Stelle präparieren muss.

Somit kann der Fahrer aus einem räumlichen Versatz der projizierten Laserstrahlen auf ein Hindernis oder eine topographische Veränderung des Untergrundes 38 schließen.

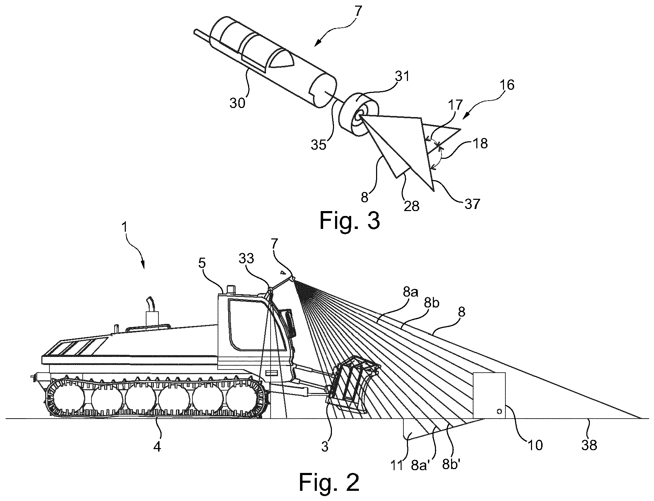

Figur 2 zeigt das Schneefahrzeug 1 aus Figur 1 in Seitenansicht, wobei die aus dem Laser 7 ausgestrahlten Laserstrahlen 8 in einem Lichtkegel auf den Untergrund 38 projiziert werden. Das Schneefahrzeug 1 besitzt an seiner Stirnseite ein Räumschild 3 zum verschieben des Schnees, mit Hilfe dessen Unebenheiten des Untergrundes 38 ausgeglichen werden können. Neben dem in Fahrtrichtung leuchtenden Laser 7 ist zudem mindestens ein Seitenlaser 33 seitlich an der Fahrerkabine 5 befestigt, wobei dieser Seitenlaser 33 die Umgebung neben dem Schneefahrzeug beleuchtet.

Figur 3 zeigt den verwendeten Laser 7 (oder 33), der aus einem Grundkörper 30 einen Grundlaserstrahl 35 ausstrahlt. Der Grundlaserstrahl 35 durcheint die Linse 31, wobei die Linse 31 das Laserlicht dahingehend formt, dass der Laserstrahl eine Kreuzstruktur 16 annimmt. Diese Kreuzstruktur 16 besteht aus zwei sich kreuzenden fächerförmigen Laserstrahlen, welche in einem Winkel 17, 18 zueinander stehen. In dem hier gezeigten Beispiel haben beide Winkel 17, 18 neunzig Grad, sodass zwei im rechten Winkel stehende Achsen ausgesendet werden.

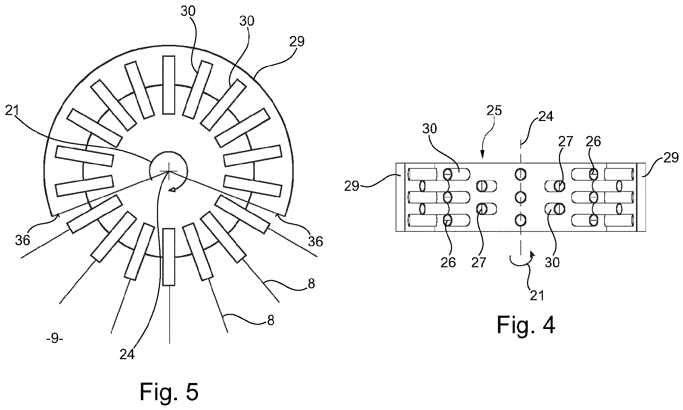

Figur 4 zeigt eine weitere Ausführungsform der vorliegenden Erfindung, wobei ein Trommelkörper 25 verwendet wird, der sich um die Drehachse 24 in Pfeilrichtung 21 dreht. Auf dem Trommelkörper 25 sind in definierten Abständen Grundlaser 30 angebracht, welche die Laserstrahlen durch unterschiedliche Linsen 26, 27 aussenden. In dem hier gezeigten Beispiel nach Figur 4 weisen die Linsen 26 ein horizontales Strichmuster auf, während die Linsen 27 ein vertikales Strichmuster aufweisen. Scheinen nun Laserstrahlen durch diese Linsen hindurch, werden diese je nach Linse 26, 27 horizontal oder vertikal ausgegeben.

Da es sich hierbei um einen rotierenden Trommelkörper handelt, werden zum Schutz des Fahrers des Schneefahrzeuges und zur Ausrichtung des auszustrahlenden Bereiches Blenden 29 am äußeren Umfang des Trommelkörpers 25 angebracht, welche zudem eine Schutzwirkung gegenüber Schnee und Vereisung besitzen.

Figur 5 zeigt den Trommelkörper 25 in Aufsicht. Die Blende 29 umschließt nicht in 360° Grad den Trommelkörper 25, sondern weist eine Öffnung 36 auf, die durch die Laserstrahlen 8 in die Umgebung 9 ausgestrahlt werden können.

In einer Weiterführung der Erfindung nach den Figuren 4 und 5 können die einzelnen Grundlaser 30 über Schleifkontakte angesteuert werden, sodass nur bei einer definierten Position der rotierenden Laser diese einen Strahl 8 abgeben und bei Nichtvorhandensein eines Kontaktes inaktiv sind.

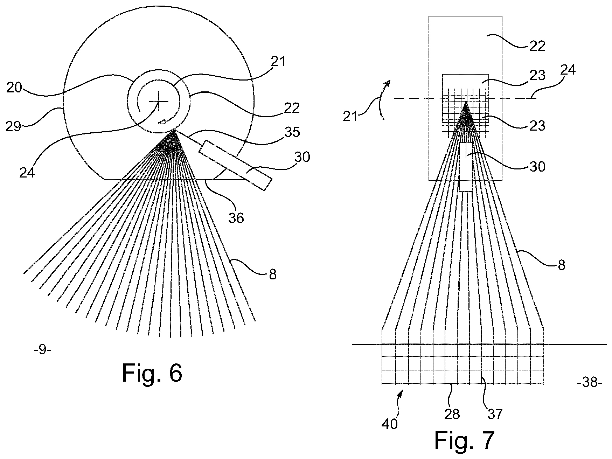

Figur 6 zeigt eine Weiterführung der Erfindung, wobei ein Grundlaser 30 einen Grundlaserstrahl 35 auf eine Trommel 20 richtet. Dies wird von einer Blende 29 umgeben, welche den empfindlichen Trommelkörper vor Schnee und Eis schützt und eine vordere Öffnungen 36 aufweist, durch welche die Laserstrahlen 8 in die Umgebung 9 ausgestrahlt werden können. Die Trommel 20 rotiert in Pfeilrichtung 21 um die Achse 24 und besitzt an ihrem Außenumfang einen Glaskörper 22 in dem mehrere Spiegelkörper eingebettet sind. Diese Spiegelkörper reflektieren den Grundstrahl 35 in einem definierten Winkel und geben ihn als Laserstrahlen 8 wieder ab.

Gemäß Figur 7 weist der Glaskörper 22 einen definierten Schliff der Oberfläche auf, sodass sich ein eingestrahlter Grundlaserstrahl 35 von dem im Glaskörper 22 eingebetteten Spiegelkörpern 23 reflektiert und so geformt wird, dass er mit einer Kreuzstruktur aus der Trommel 20 austritt. Die so geformten Laserstrahlen 8 treffen auf den Untergrund 38 auf, wo die Gitterstruktur sichtbar wird. Das Gitter besteht aus den waagerechten Querlinien 28, sowie den die Querlinien 28 kreuzenden Längslinien 37.

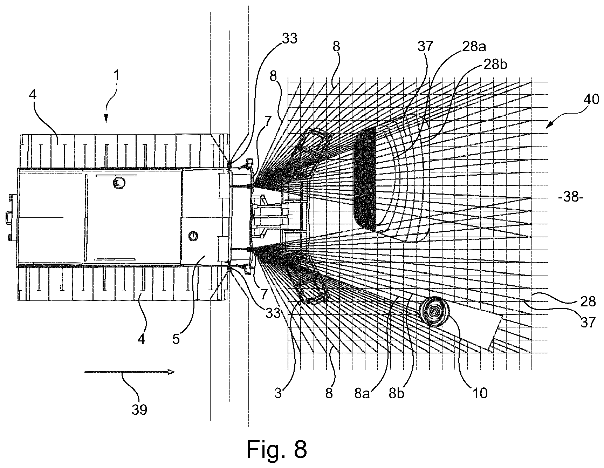

Figur 8 zeigt das Schneefahrzeugt 1 in Draufsicht. Das Schneefahrzeugt 1 fährt in Fahrtrichtung 39 über den Untergrund 38. Über die auf dem Fahrerkabinendach montierten Laser 7 beleuchtet das Schneefahrzeug 1 den Untergrund 38. Durch die spezielle Formung der Laserstrahlen 8 wird ein Gittermuster 40 auf den Untergrund 38 projiziert. Das Gittermuster 40 besteht aus den Querlinien 28, sowie den die Querlinien 28 kreuzenden Längslinien 37.

Erreicht nun das Schneefahrzeug 1 die Vertiefung 11, wird das vor das Schneefahrzeug projizierte Gittermuster 40 verformt, sodass es zu einem räumlichen Versatz der Quer- und Längslinien 28, 37 zueinander kommt. Ein solcher räumlicher Versatz ist für den Fahrer des Schneefahrzeuges optisch erkennbar und er kann so auf ein Hindernis oder eine topographische Veränderung des Untergrundes 38 schließen.

Durch die Vertiefung 11 werden die Querlinien 28 des Gittermusters 40 als gebogene Linien 28a, 28b dargestellt, während die Längslinien 37 weiterhin gerade auf dem Untergrund 38 verlaufen. Durch die unterschiedlichen Biegungen der Querlinien 28a, 28b kann der Fahrer auf die Tiefe und den Umfang der Vertiefung schließen.

Figur 8 zeigt ein weiteres Ausführungsbeispiel, wobei die Laserstrahlen 8 auf ein dreidimensionales Objekt 10, hier dargestellt als Baumstumpf, treffen. Durch die Position des Objekts 10 in Strahlrichtung der Laserstrahlen 8, wird die Wegstrecke der Laserstrahlen 8 verkürzt, sodass die verkürzten Strahlen 8a, 8b auf das Objekt treffen. Durch die Veränderung der Strahllänge und Beleuchtung des Objekts 10 durch die Laserstrahlen 8a, 8b kann der Fahrer auf das Objekt und die Größe des Objektes 10 schließen und ein entsprechendes Fahrmanöver durchführen und dem Objekt ausweichen.

Neben den Lasern 7 befinden sich Seitenlaser 33 an der Fahrerkabine 5, die die Seitenbereiche der Umgebung 38 neben dem Schneefahrzeug 1 ausleuchten.

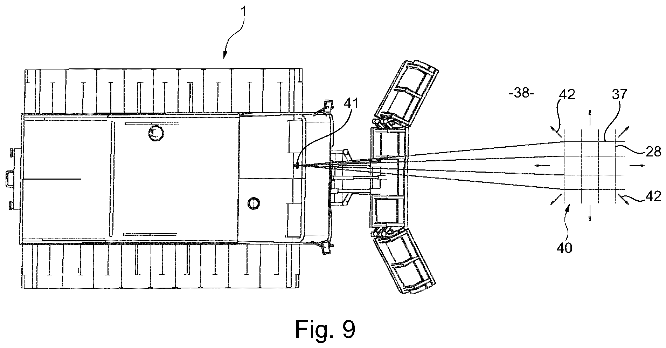

Figur 9 zeigt ein Schneefahrzeug 1 mit einem Suchscheinwerfer 41, der ein räumlich begrenztes Gittermuster 40 auf den Untergrund 38 projiziert. Der Suchscheinwerfer 41 wird von Hand betätigt und kann in alle Richtungen gedreht und geschwenkt werden. Zudem kann das Gittermuster 40 in Pfeilrichtung 42 vergrößert werden.

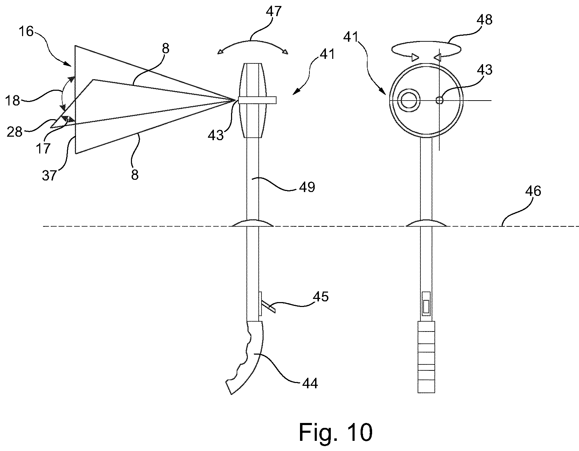

Figur 10 zeigt den Suchscheinwerfer 41 in Seiten- sowie Vorderansicht, der auf einem längenverstellbaren Teleskoparm 49 lagert und durch das Kabinendach 46 ragt. Der Suchscheinwerfer 41 kann über einen Griff 44 betätigt werden und im Schwenkwinkel 47 und/oder in Drehrichtung 48 verstellt werden. Über einen Schalter 45 kann der Suchscheinwerfer aus und ein geschaltet werden, sowie eine räumliche Größe des Gittermusters eingestellt werden.

Der Suchscheinwerfer 41 ist mit einer Foto-Laserdiode 43 ausgestattet, welche ein Gittermuster erzeugt. Die Kreuzstruktur 16 des Gittermusters besteht aus zwei sich kreuzenden, fächerförmigen Laserstrahlen, welche in einem Winkel 17, 18 zueinander stehen. In dem hier gezeigten Beispiel haben beide Winkel 17, 18 neunzig Grad, sodass zwei rechtwinklige Achsen ausgesendet werden.

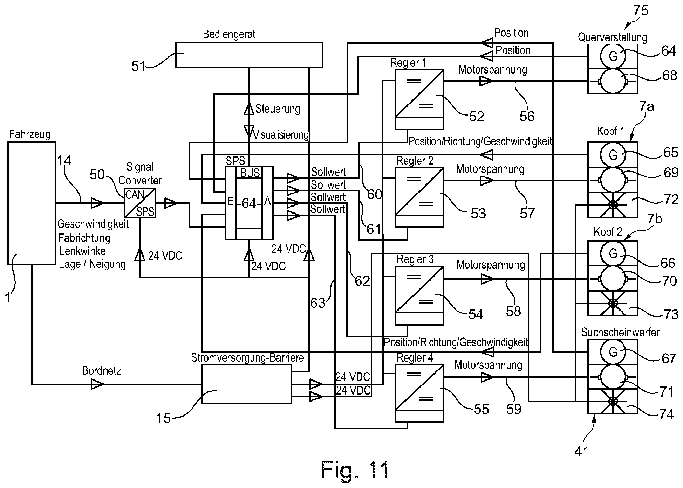

Figur 11 zeigt ein Blockschaltbild der verwendeten Schaltung des Schneefahrzeuges 1. Dabei wandelt ein Signal-Converter 50 die Signale der Fahrzeugelektronik (CAN BUS) in SPS kompatible Signale um. Somit werden die von dem Schneefahrzeug 1 ankommenden Signale 14, wie z.B. Geschwindigkeit, Fahrtrichtung, Lenkwinkel, Lage und Neigung in SPS-Steuersignale umgewandelt. Eine SPS Zentralbaugruppe (CPU) 19 als zentrale Recheneinheit verarbeitet alle Eingangssignale und führt alle notwendigen Berechnungen aus um anschließend die Befehle und Ausgangssignale an die einzelnen Komponenten auszugeben.. Die SPS Zentralbaugruppe 19 berechnet aus den eingespeisten Ist-Werten die Soll-Werte 60-63 und gibt diesen an die unterschiedlichen Regler 52-55 weiter. Die Regler 52-55 regeln anschließend über die Motorspannungen 56-59 die Antriebe zur Bewegung der beiden Laser 7a, 7b oder des Suchscheinwerfers 41. Diese Teile weisen jeweils einen Antriebsmotor 68-71 (Gleich- oder Wechselstrom Getriebemotoren je nach Anforderungen) mit einem zugeordneten Drehgeber 64-67 auf. Eine Querverstellung 75 dient als Schwenkmotor für die Auslenkungen des Gittermustersystems, wobei das in Fahrtrichtung mitbewegende Gittermuster bei einer Kurvenfahrt nicht in der Gitterstruktur einknickt.

Die Drehgeber 64-67 erfassen Position, Geschwindigkeit und Laufrichtung der Antriebe und können für verschiedene Steuerungsaufgaben verwendet werden. Sie geben Signale aus, die von der SPS Zentralbaugruppe 19 verarbeitet werden. Je nach Art der verwendeten Geber (Impulse, Sinuswellen, Spannung, etc.) können verschiedene Steuerungen realisiert werden.

Beschleunigt das Schneefahrzeug beispielsweise, werden die Projektionseinheiten 72-74 der Laser 7a, 7b oder des Suchscheinwerfers 41 so angesteuert, dass sich das Gittermuster 40 mit einer relativen Geschwindigkeit auf das Schneefahrzeug 1 zu bewegt. Der Fahrer des Fahrzeuges hat somit den Eindruck, dass er das Gittermuster überfährt. Verlangsamt das Schneefahrzeug die Geschwindigkeit, verringert sich auch die relative Geschwindigkeit des Gittermusters.

Durch die Erzeugung eines dynamischen Gittermusters ergibt sich der Vorteil, dass das so erzeugte Gittermuster unabhängig von Fahrzeugschwankungen und Wankbewegungen stabil auf den zu befahrenen Untergrund projiziert wird.

Zur Steuerung des Lasers kann beispielsweise die Drehgeschwindigkeit der Trommeln 20 und 25 aus den Figuren 5 und 6 reguliert werden.

Über ein Bediengerät 51 wird die gesamte Anlage gesteuert, wobei alle einstellbaren Parameter damit ausgewählt, verändert und visualisiert (angezeigt) werden können.

Ein Stromversorgungsmodul 15 dient zur Stromversorgung aller Komponenten.

### Zeichnungslegende

- 1.: Schneefahrzeug
- 2. 3.: Räumschild
- 4.: Kettenlaufwerk
- 5.: Fahrerkabine
- 6.: Leuchtkörper
- 7.: Laser 7a, 7b
- 8.: Laserstrahl 8a, 8b, 8a', 8b'
- 9.: Umgebung
- 10.: Objekt
- 11: .Vertiefung
- 12.: Drehgeber
- 13.: Signal
- 14.: Signal
- 15.: Stromversorgungsmodul
- 16.: Kreuz
- 17.: Winkel
- 18.: Winkel
- 19.: SPS Zentralbaugruppe (CPU)
- 20.: Trommel
- 21.: Pfeilrichtung
- 22.: Glaskörper (geschliffen)
- 23.: Spiegelkörper
- 24.: Drehachse
- 25.: Trommel
- 26.: Linse
- 27.: Linse
- 28.: Querlinie 28a, 28b
- 29.: Blende
- 30.: Grundlaser
- 31.: Linse
- 32.: Frontscheibe
- 33.: Seitenlaser
- 34. 35.: Grundlaserstrahl
- 36.: Öffnung (von 29)
- 37.: Längslinien
- 38.: Untergrund
- 39.: Fahrtrichtung
- 40.: Gittermuster
- 41.: Suchscheinwerfer
- 42.: Pfeilrichtung
- 43.: Foto-Laserdiode
- 44.: Griff
- 45.: Schalter
- 46.: Kabinendach
- 47.: Schwenkwinkel
- 48.: Drehrichtung
- 49.: Teleskoparm
- 50.: Signal-Converter
- 51.: Bediengerät
- 52.: Regler
- 53.: Regler
- 54.: Regler
- 55.: Regler
- 56.: Motorspannung
- 57.: Motorspannung
- 58.: Motorspannung
- 59.: Motorspannung
- 60.: Sollwert
- 61.: Sollwert
- 62.: Sollwert
- 63.: Sollwert
- 64.: Drehgeber
- 65.: Drehgeber
- 66.: Drehgeber
- 67.: Drehgeber
- 68.: Antriebsmotor
- 69.: Antriebsmotor
- 70.: Antriebsmotor
- 71.: Antriebsmotor
- 72.: Projektionseinheit
- 73.: Projektionseinheit
- 74.: Projektionseinheit
- 75.: Querverstellung

## Patentansprüche

1. Fahrzeug (1) mit mindestens einem Beleuchtungselement zur Orientierung in der Umgebung (9) des Fahrzeuges, sowie zur optischen Erkennung von Hindernissen (10, 11) bzw. der topografischen Oberflächenbeschaffenheit der Umgebung (9), wobei das Beleuchtungselement ein Laser (7, 33) mit mindestens einem Laserstrahl (8, 8a, 8b) ist, der ein Muster mit einer Struktur (28, 28a, 28b, 37, 40) auf den Untergrund (38) der Umgebung (9) projiziert, welches Muster an dem zur erkennende Hindernis oder dem topografischen Verhältnis optisch erkennbar verzerrt ist, **dadurch gekennzeichnet, dass**
- das Fahrzeug ein Schneefahrzeug, insbesondere ein Pistengerät zur Präparierung von Skipisten und Loipen ist,
- dass für einen Fahrer des Fahrzeuges eine objektbezogene optische Erkennung der Umgebung erfolgt,
- dass der Laser selbstnivellierend ist
- und dass das Schneefahrzeug eine Lasersteuerung mit einem Gyroskop-Sensor aufweist.

2. Schneefahrzeug nach Anspruch 1, **dadurch gekennzeichnet, dass** eine Bestimmung des aktuellen Standortes mittels der Erfassung von Richtungsänderungen durch den Gyroskop-Sensor in Verbindung mit einer Streckenmessung erfolgt.

3. Schneefahrzeug nach Anspruch 1 oder 2, **dadurch gekennzeichnet, dass** die Laserprojektion auf den Untergrund (38) in Abhängigkeit von der Fahrgeschwindigkeit, des Lenkwinkels, des gewählten Getriebegangs, sowie über Inertialsensoren, die die Neigung des Schneefahrzeuges (1) im Gelände erfassen, steuerbar ist.

4. Schneefahrzeug (1) nach einem der Ansprüche 1 bis 3, **dadurch gekennzeichnet, dass** eine Linse (26, 27) den Laserstrahl (35) optisch derart transformiert, dass dieser aus seiner Einbauposition am Schneefahrzeug (1) auf den Untergrund (38) gerichtet das Muster mit der definierten Struktur (28, 28a, 28b, 37, 40) erzeugt.

5. Schneefahrzeug (1) nach einem der Ansprüche 1 bis 4, **dadurch gekennzeichnet, dass** die Struktur ein Gittermuster (40) oder eine Punktstruktur oder eine Kreisstruktur oder eine Linienstruktur ist.

6. Schneefahrzeug (1) nach einem der Ansprüche 1 bis 5, **dadurch gekennzeichnet, dass** ein seitlich an oder auf der Fahrerkabine (5) montierter Seitenlaser (33) eine zusätzliche Struktur auf den Untergrund (38) neben dem Schneefahrzeug (1) projiziert.

7. Schneefahrzeug (1) nach einem der Ansprüche 1 bis 6, **dadurch gekennzeichnet, dass** auf einem fahrzeugseitigen drehbaren Trommelkörper (25) mehrere Laser (30) angebracht sind, wobei der Trommelkörper (25) die Laserstrahlen (8) durch unterschiedliche Linsen (26, 27) aussendet, wobei die einen Linsen (26) ein horizontales Strichmuster erzeugen, während die anderen Linsen (27) ein vertikales Strichmuster erzeugen.

8. Schneefahrzeug nach einem der Ansprüche 1 bis 6, **dadurch gekennzeichnet, dass** am Außenumfang eines fahrzeugseitigen drehbaren Trommelkörpers (25) ein oder mehrere Glaskörper (22) angeordnet sind, in denen mehrere Spiegelkörper (23) eingebettet sind, die einen oder mehrere Laserstrahl (35) reflektieren.

9. Schneefahrzeug nach Anspruch 8, **dadurch gekennzeichnet, dass** der Glaskörper (22) einen definierten Schliff der Oberfläche aufweist, der einen reflektierten Laserstrahl (35) so formt, dass er mit einer Kreuzstruktur aus der Trommel (20) austritt.

10. Schneefahrzeug nach einem der Ansprüche 1 bis 9, **dadurch gekennzeichnet, dass** die Laser (7, 33) auf einem ein- und ausfahrbaren Teleskoparm (49) gelagert sind.

11. Schneefahrzeug nach Anspruch 10, **dadurch gekennzeichnet, dass** der Teleskoparm (49) elektrisch oder über einen elektromotorischen Stellmotor steuerbar ist.

## Claims

1. Vehicle (1) with at least one lighting element for orientation in the surrounding environment (9) of the vehicle, as well as for the visual detection of obstacles (10, 11) and/or the topographical surface conditions of the surrounding environment (9), and the illumination element is a laser (7, 33) with at least one laser beam (8, 8a, 8b) which projects a pattern with a structure (28, 28a, 28b, 37, 40) onto the ground (38) in the surrounding environment (9), and the pattern which is applied to the obstacle to be detected or the topographical conditions of the surrounding environment (9) is distorted in a visually perceptible way, **characterised by the fact that**
- the vehicle is a snow vehicle, specifically a piste vehicle to prepare ski pistes and cross country ski trails,
- that for a driver of the vehicle an object-related visual recognition of the surrounding environment occurs,
- that the laser is self-levelling
- and that the snow vehicle has laser control with a gyroscope sensor.

2. Snow vehicles according to claim 1 are **characterised by** the fact that a determination of the current location by means of the detection of directional changes by the gyroscope sensor in conjunction with distance measurement takes place.

3. Snow vehicle which, according to claims 1 or 2, is **characterised by** the fact that the laser projection onto the ground (38) is controllable based on the driving speed, the steering angle, the selected gear ratio, as well as via inertial sensors which detect the inclination of the snow vehicle (1) in the terrain.

4. Snow vehicle (1) according to one of the claims 1 to 3, **characterised by the fact** that a lens (26, 27) visually transforms the laser beam (35) in such a way that, from its installation position on the snow vehicle (1), the laser beam being directed onto the ground (38) generates the pattern with the defined structure (28, 28a, 28b, 37, 40).

5. Snow vehicle (1 ) according to claim 1 or 4, **characterised by the fact that** the structure is a grid pattern (40) or a dot structure or a circle structure or a line structure.

6. Snow vehicle (1) according to any one of claims 1 to 5, **characterised by the fact that** a side laser (33), mounted laterally onto or upon the driver's cab (5), projects an additional structure onto the ground (38) next to the snow vehicle (1 ).

7. Snow vehicle (1) according to one of claims 1 to 6, **characterised by** the presence of several lasers (30) mounted on a rotatable drum body (25) on the vehicle side, whereby the laser beams (8) are emitted by the drum body (25) through various lenses, whereby some lenses (26) produce a horizontal stroke pattern whilst the other lenses (27) produce a vertical stroke pattern.

8. A snow vehicle according to any one of claims 1 to 6, **characterised by the fact that** one or more glass bodies (22) are arranged on the outer periphery of a rotatable drum body (25) on the vehicle side,
in which several mirror bodies (23) are embedded, which reflect one or more laser beams (35).

9. Snow vehicle according to claim 8, **characterised by the fact that** the glass body (22) has a defined surface cut which shapes a reflected laser beam (35) so that it emerges from the drum (20) with a cross structure.

10. Snow vehicle according to one of the claims 1 to 9, **characterised by the fact that** the lasers (7, 33) are mounted on a retractable and extendible telescopic arm (49).

11. Snow vehicles according to claim 10 are **characterised by** the fact that the telescopic arm (49) can be controlled electrically or by an electric motor.

## Revendications

1. Véhicule (1) avec au moins un élément d'éclairage pour l'orientation dans l'environnement (9) du véhicule, ainsi que pour la reconnaissance optique d'obstacles (10, 11) ou de la nature de surface topographique de l'environnement (9), dans lequel l'élément d'éclairage est un laser (7, 33) avec au moins un faisceau laser (8, 8a, 8b), qui projette un motif avec une structure (28, 28a, 28b, 37, 40) sur le sol (38) de l'environnement (9), lequel motif est déformé de manière optiquement reconnaissable sur l'obstacle à reconnaître ou la condition topographique, **caractérisé en ce que**
- le véhicule est un véhicule de neige, en particulier un engin de damage de pistes pour la préparation de pistes de ski alpin et de pistes de ski de fond,
- que pour un conducteur du véhicule une reconnaissance optique de l'environnement relative à un objet s'effectue,
- que le laser est auto-nivelant
- et que le véhicule de neige présente une commande laser avec un capteur gyroscopique.

2. Véhicule de neige selon la revendication 1, **caractérisé en ce qu'**une détermination de l'emplacement actuel s'effectue au moyen de la détection de changements de direction par le capteur gyroscopique en liaison avec une mesure de parcours.

3. Véhicule de neige selon la revendication 1 ou 2, **caractérisé en ce que** la projection laser sur le sol (38) peut être commandée en fonction de la vitesse de déplacement, de l'angle de braquage, du rapport de transmission sélectionné, ainsi que par l'intermédiaire de capteurs inertiels, qui détectent l'inclinaison du véhicule de neige (1) dans le terrain.

4. Véhicule de neige (1) selon l'une quelconque des revendications 1 à 3, **caractérisé en ce qu'**une lentille (26, 27) transforme le faisceau laser (35) optiquement, de telle sorte que celui-ci génère le motif avec la structure définie (28, 28a, 28b, 37, 40) à partir de sa position de montage sur le véhicule de neige (1) de manière dirigée vers le sol (38).

5. Véhicule de neige (1) selon l'une quelconque des revendications 1 à 4, **caractérisé en ce que** la structure est un motif de treillis (40) ou une structure de points ou une structure circulaire ou une structure linéaire.

6. Véhicule de neige (1) selon l'une quelconque des revendications 1 à 5, **caractérisé en ce qu'**un laser latéral (33) monté latéralement contre ou sur la cabine de conducteur (5) projette une structure supplémentaire sur le sol (38) à côté du véhicule de neige (1).

7. Véhicule de neige (1) selon l'une quelconque des revendications 1 à 6, **caractérisé en ce que** plusieurs lasers (30) sont placés sur un corps de tambour (25) rotatif côté véhicule, dans lequel le corps de tambour (25) envoie les faisceaux laser (8) au moyen de différentes lentilles (26, 27), dans lequel les unes des lentilles (26) génèrent un motif à traits horizontaux, tandis que les autres lentilles (27) génèrent un motif à traits verticaux.

8. Véhicule de neige selon l'une quelconque des revendications 1 à 6, **caractérisé en ce qu'**un ou plusieurs corps en verre (22), dans lesquels plusieurs corps spéculaires (23) sont intégrés, qui réfléchissent un ou plusieurs faisceaux laser (35), sont disposés sur la périphérie extérieure d'un corps de tambour (25) rotatif côté véhicule.

9. Véhicule de neige selon la revendication 8, **caractérisé en ce que** le corps en verre (22) présente un poli défini de la surface, qui forme un faisceau laser (35) réfléchi, de sorte qu'il sort du tambour (20) avec une structure en croix.

10. Véhicule de neige selon l'une quelconque des revendications 1 à 9, **caractérisé en ce que** les lasers (7, 33) sont logés sur un bras télescopique (49) pouvant rentrer et sortir.

11. Véhicule de neige selon la revendication 10, **caractérisé en ce que** le bras télescopique (49) peut être commandé électriquement ou par l'intermédiaire d'un servomoteur électromoteur.
